# EUROPÄISCHE PATENTANMELDUNG

(11) **EP 4 257 268 A1**
(43) Veröffentlichungstag der Anmeldung: **11.10.2023**
(21) Anmeldenummer: 22167377.5
(22) Anmeldetag: 08.04.2022
(51) Int. Cl.: B22F 3/10, B22F 3/16, B22F 10/12, H02K 1/02, H02K 15/02, B33Y 80/00, B22F 3/24, H02K 1/14, H02K 1/24

(54) **VERFAHREN ZUR HERSTELLUNG EINES ROTATIONSSYMMETRISCHEN MAGNETBLECHS, MAGNETBLECH, BLECHPAKET UND ELEKTRISCHE MASCHINE**

(71) Anmelder: Siemens Aktiengesellschaft, 80333 München (DE)
(72) Erfinder: Rieger, Gotthard, 80636 München (DE); Vollmer, Rolf, 36129 Gersfeld (DE)
(74) Vertreter: Siemens Patent Attorneys

(57) **Zusammenfassung**

Die Erfindung betrifft ein Verfahren zur Herstellung eines rotationssymmetrischen Magnetblechs (2) eines Blechpakets (4) einer elektrischen Maschine (6) das eine Mehrzahl von radial verlaufenden Wickelzähnen (8) aufweist, umfassend folgende Schritte:
- Herstellen eines Grünkörpers (10) durch Aufbringen einer Druckpaste (12) auf ein Substrat (14) mittels eines Schablonendruckverfahrens (16), wobei die Druckpaste (12) Bindemittel und Eisenpartikel umfasst und die Eisenpartikel mehr als 95 Gew. % Eisen umfassen,
- eine erste thermische Behandlung (18), wobei die Bindemittel aus dem Grünkörper (10) entfernt werden und daraus ein Vorkörper (20) entsteht,
- eine zweite thermische Behandlung (22) des Vorkörpers (20) in Form eines Sinterprozesses, zur Herstellung des Magnetblechs (2), wonach
- das Magnetblech (2) in seiner Blechebene (26) uniaxial mittels eines Pressstempels (28) mit einem Druck von mehr als 5 MPa gepresst wird.

## Beschreibung

Die Erfindung betrifft ein Verfahren zur Stellung eines Magnetblechs nach Anspruch 1, ein Magnetblech nach Anspruch 11 sowie ein Blechpaket nach Patentanspruch 12 und eine elektrische Maschine nach Patentanspruch 13.

Elektrische Maschinen, insbesondere Elektromotoren haben einen Rotor, der auf einer Welle montiert ist und der ein Blechpaket aufweist, das mit entsprechenden Wicklungen umwickelt ist. Das Blechpaket besteht bzw. umfasst vor allem weichmagnetische Einzelbleche, die bei herkömmlichen Motoren im Allgemeinen aus Blechbändern herausgestanzt sind und zu einem Blechpaket gestapelt sind. Für moderne Hochleistungsmotoren werden additiv hergestellte Bleche, die beispielsweise durch Schablonendruckverfahren gefertigt sind, gesintert und ebenfalls zu einem Blechpaket gestapelt sind. Derartige gedruckte Bleche weisen den Vorteil auf, dass man bezüglich der Materialpaarung vorteilhafte weichmagnetische Materialien verwenden kann, um sehr gute weichmagnetische Eigenschaften zu generieren. Allerdings führen die hierzu angewandten Sinterprozesse zu einem isotropen Kristallwachstum, was wiederum die Koerzitivfeldstärke in den Vorzugsrichtungen der Blechebene eher negativ beeinflusst. Für niedrige Frequenzen muss das Magnetblech möglichst geringe magnetische Hystereseverluste aufweisen und somit eine geringe Koerzitivfeldstärke in Flussrichtung aufweisen. Die Aufgabe der Erfindung besteht darin, ein Verfahren zur Herstellung eines Magnetbleches sowie ein Magnetblech an sich, ein daraus gebildetes Blechpaket und eine elektrische Maschine bereitzustellen, die gegenüber dem Stand der Technik, insbesondere gestanzten Magnetblechen sowie gedruckten und gesinterten Magnetblechen einerseits sehr gute weichmagnetische Eigenschaften aufweisen und dabei insbesondere in den Bereichen, in denen ein magnetischer Fluss auftritt, eine sehr geringe Koerzitivfeldstärke umfassen.

Die Lösung der Aufgabe besteht in einem Verfahren zur Herstellung eines Magnetblechs nach Anspruch 1, sowie in einem Magnetblech mit den Merkmalen des Anspruchs 11, in einem Blechpaket mit den Merkmalen des Anspruchs 12 sowie einer elektrischen Maschine mit den Merkmalen des Anspruchs 13.

Das beschriebene Verfahren zur Herstellung eines rotationssymmetrischen Magnetblechs nach Patentanspruch 1 dient dazu ein Magnetblech für ein Blechpaket einer elektrischen Maschine herzustellen. Das Magnetblech weist dabei eine Mehrzahl radial verlaufenden Wickelzähnen auf. Das Verfahren umfasst dabei folgende Schritte:
- Herstellen eines Grünkörpers durch Aufbringen einer Druckpaste auf ein Substrat mittels eines Schablonendruckverfahrens, wobei die Druckpaste Bindemittel und Eisenpartikel umfasst und die Eisenpartikel mehr als 95 Gew. % Eisen umfasst.
- Es folgt eine erste thermische Behandlung, wobei die Bindemittel aus dem Grünkörper entfernt werden und daraus ein Vorkörper entsteht.
- Im Weiteren erfolgt eine zweite thermische Behandlung des Vorkörpers in Form eines Sinterprozesses zur Herstellung des Magnetblechs.
- Hiernach wird das Magnetblech in seiner Blechebene uniaxial mittels eines Pressstempels mit einem Druck von mehr als 5 MPa gepresst.

Der Vorteil des beschriebenen Verfahrens besteht darin, dass ein Magnetblech hergestellt wird, das aufgrund des Schablonendruckverfahrens und des anschließenden Entbinderns bzw. Sinterprozesses gegenüber den herkömmlichen gestanzten Magnetblechen des Stands der Technik Materialien verwenden, die besonders gute weichmagnetische Eigenschaften aufweisen und dabei möglichst einen hohen Eisenanteil aufweisen, der mindestens 95 % Eisen umfasst. Im Idealfall wird hierfür Reineisen mit nur sehr geringer Verunreinigung verwendet. Somit unterscheidet sich dieses gedruckte und gesinterte Magnetblech vom Stand der Technik bezüglich seiner weichmagnetischen Eigenschaften. Es hat sich dabei überraschend herausgestellt, dass eine uniaxiale Pressung mit einem Druck von mindestens 5 MPa in einem bevorzugten Druckbereich bis etwa 50 MPa, insbesondere in den Wickelzähnen in radialer Richtung eine Kristallstruktur entsteht, die den Magnetfluss entlang dieser radialen Richtung des Wickelzahnes positiv beeinflusst und dort die sehr geringe Hystereseverluste auftreten und somit auch eine geringe Koerzitivfeldstärke vorliegt. Ferner bewirkt das uniaxiale Pressen eine Verbesserung der Planarität des Magnetbleches, was bei der Stapelung in einem Blechpaket zu einer dichteren Packung und somit auch zu einem höheren Eisengehalt pro Volumen des Einheitsblechpaketes führt.
Unter einem Grünkörper wird dabei ein Formkörper für eine spätere Wärmebehandlung verstanden, der in der Regel Bindemittel, die auch Lösemittel umfassen, enthält, die der besseren Formgebung dienen. Ein Grünkörper ist an sich in der Regel mechanisch selbsttragend und mechanisch begrenzt belastbar. Ein von diesen Bindemitteln und/oder Lösungsmitteln befreiter Grünkörper wird in diesem Zusammenhang als Vorkörper bezeichnet. Der Formkörper enthält die lediglich funktionale Bestandteile des endgültigen Körpers, die auch aktiv am Sinterprozess teilhaben. Durch die Wärmebehandlung in Form eines Sintervorgang, bei dem anders als bei einem Schmelzvorgang über Diffusionsprozesse einzelne Körner im Vorkörper durch Diffusionsprozesse eine zusammenhängende, stofflich verbundene Struktur bilden, wird der Vorkörper in einen Sinterkörper überführt. Nach Durchführung des Sintervorganges wird der daraus entstandene Körper in diesem Zusammenhang als Magnetblech bezeichnet. Dieses Magnetblech kann allerdings noch verschiedenen Nachbearbeitungen zugeführt werden.

Unter einem Schablonendruckverfahren wird ein Verfahren verstanden, bei dem eine Druckpaste beispielsweise mittels eines Rakels auf ein Substrat aufgebracht wird, wobei eine Schicht entsteht, die üblicherweise eine Dicke aufweist, die im Bereich zwischen 70 µm und 300 µm (insbesondere zwischen 150 µm und 250 µm) liegt. Die Paste wird nur auf bestimmte, nicht abgedeckte Bereiche, die mittels einer Schablone freigehalten sind, auf das Substrat gedruckt. In der Regel wird die Paste dabei durch ein Sieb gedruckt, was aber nicht zwingend notwendig ist. Ein Schablonendruck unter Verwendung eines Siebes wird Siebdruckverfahren bezeichnet, weshalb das Siebdruckverfahren unter das Schablonendruckverfahren begrifflich subsumiert wird.

Ferner ist es zudem zweckmäßig nach dem beschriebenen Pressvorgang eine dritte thermische Behandlung in Form eines Rekristallisationsglühens durchzuführen. Diese wird bevorzugt in einer Temperaturspanne zwischen 600°C und 800°C durchgeführt. Der Rekristallisationsglühprozess sollte dabei bei einer konstanten Temperatur mindestens 8 Minuten bis etwa 30 Minuten durchgeführt werden. In der Regel ist das Rekristallisationsglühen nach 60 Minuten bei einer konstanten Temperatur in dem beschriebenen Temperaturfenster fertiggestellt. Durch diesen Glühprozess wird die Ausbildung einer magnetisch wirksamen Textur begünstigt.

Dabei handelt es sich bevorzugt um eine anisotrope magnetische Textur entlang einer radialen Erstreckung der Wickelzähne. Diese radiale Erstreckung der Wickelzähne ist auch der magnetische Flusspfad, in dem der magnetische Fluss erfolgt und die weichmagnetischen Eigenschaften mit den möglichst geringen Hystereseverluste anliegen sollen. Als Textur hat sich dabei insbesondere eine sogenannte Goss-Textur als vorteilhaft herausgestellt. Jedoch ist auch eine sogenannte Würfeltextur zweckmäßig. In vorteilhafter Weise weisen die Körner der Textur 34 einen mittleren Durchmesser in einer Bildebene von 80 µm bis 400 µm auf.

Unter Textur versteht man in der Kristallographie die Gesamtheit der Orientierungen der Kristallite eines vielkristallinen Festkörpers. Die Orientierung eins Kristalls kann aufgrund von Beugung einer einfallenden Welle an den Gitterebenen bestimmt werden. Nach der Bragg-Gleichung lässt sich einer einfallenden monochromatischen Strahlung und dem Gitterparameter der Gitterebene ein Winkel zuordnen. Beispielsweise wird die Textur mittels polarisierten Lichts in einem Kerr-Mikroskop sichtbar gemacht. Hierbei wird ein Schliffbild der Magnetblechoberfläche angefertigt, das unter dem Mikroskop mittels einer Bildbearbeitungssoftware ausgewertet wird. Für die Bildverarbeitung kann beispielsweise sowohl ein Mikroskop der Firma Zeiss als auch die hierzu vorhandene Software ZEN angewendet werden. Bei der hier beschriebenen Textur weisen mehr als 50 % der magnetisch wirksamen Domänen eine Vorzugsrichtung auf, die weniger als 36 ° von der Radialrichtung abweichen.

Die Goss-Textur ist eine Sonderart der Textur magnetischer Bleche, wobei die kubischen Kristalle des Eisenkristallgitters bei dieser Textur in der (110)-Richtung in der Blechebene liegen, wobei die Würfelkanten des kubischen Gitters wie oben definiert im Wesentlichen der radialen Erstreckung der Wickelzähne folgen. Im nicht darstellbaren Idealfall orientieren sich die Würfelkanten entlang des Radius des Magnetblechs. Auch eine sogenannte Würfeltextur ist zweckmäßig, wobei die Würfelkanten ebenfalls im Idealfall entlang des Radius verlaufen, aber in (100)-Richtung orientiert sind.

Ferner hat sich herausgestellt, dass die Körnertextur einen mittleren Durchmesser in einer Bildebene von 100 µm bis 400 µm aufweisen. Dabei haben die Körner eine bevorzugte Dicke, die zwischen 40 und 80, insbesondere um 60 µm herum beträgt.

Durch das Schablonendruckverfahren kann über Parameter wie der Rakeldruck und die Menge der Paste die Dicke des herzustellenden Grünkörpers variiert werden. Die Dicke des Grünkörpers liegt bevorzugt zwischen 100µm und 400 µm, woraus nach der zweiten thermischen Behandlung eine Dicke eines Magnetblechs resultiert, die in einem Bereich zwischen 100 µm und 300 µm liegt. Besonders bevorzugt liegt die Dicke des Magnetbleches zwischen 150 µm und 250 µm. Damit sind die Magnetbleche gegenüber herkömmlich gestanzten Blechen deutlich dünner, gestanzte Bleche haben üblicherweise eine Dicke von minimal 330 µm. Dabei ist anzumerken, dass Wirbelstromverluste im Betrieb der elektrischen Maschine sich quadratisch mit geringeren Dicken des Magnetblechs reduzieren. Somit führen dünnere Bleche zu geringeren Wirbelstromverlusten in der elektrischen Maschine. Durch gestanzte Bleche sind Blechdicken unter 330 µm nach dem Stand der Technik nicht mit der reproduzierbar hohen Qualität zu erreichen.

In einer weiteren Ausgestaltungsform der Erfindung ist der Anteil des Eisens in den Eisenpartikeln möglichst hoch. Es sollte mindestens 95 % betragen, bevorzugt 97 Gew. % und besonders bevorzugt mehr als 99 Gew. % aufweisen. Umso höher der Eisengehalt ist, umso besser ist die Magnetisierbarkeit des Magnetbleches. Diese erhöht bei einem Elektromotor das Drehmoment bei niedrigen Wirbelstromverlusten, wodurch der Elektromotor bzw. die elektrische Maschine einen besseren Wirkungsgrad und Energieeffizienz erhält.

In einer weiteren Ausgestaltungsform der Erfindung wird der Pressstempel während des Pressvorgangs um einen Winkel α von weniger als 10°, insbesondere weniger als 3°, mindestens 0,5° gedreht wird. Neben dem uniaxialen Druck auf das Magnetblech wird hierdurch auch noch eine Scherkraft aufgebracht, sodass auch eine Textur in Umfangsrichtung des Magnetbleches außerhalb der Wickelzähne eingeschlossenen umlaufenden Joch erzeugt werden.

Ein weiterer Bestandteil der Erfindung ist ein rotationssymmetrisches Magnetblech für ein Blechpaket einer elektrischen Maschine. Das Magnetblech zeichnet sich dadurch aus, dass es eine Dicke aufweist, die zwischen 100 µm und 250 µm liegt und eine gesinterte metallische Phase aufweist, die mindestens einen Eisenanteil von 95 Gew. % umfasst. Ferner weist das Magnetblech eine Mehrzahl von radial verlaufenden Wickelzähnen auf. Ferner sind eine Mehrzahl von radialen Wickelzähnen vorgesehen entlang der radialen Erstreckung eine anisotrope magnetische Textur vorliegt. Das beschriebene Magnetblech weist dieselben Vorteile auf, die bereits bezüglich des Magnetblechs, das mit dem Verfahren nach Patentanspruch 1 herstellbar ist, beschrieben sind. Die anisotrope magnetische Textur, die insbesondere durch das uniaxiale Pressen des Magnetbleches erzielt wird, führt besonders guten weichmagnetischen Eigenschaften des Magnetblechs.

Ein weiterer Bestandteil der Erfindung ist ein Blechpaket einer elektrischen Maschine mit einer Mehrzahl von gestapelten Magnetblechen, die wiederum hergestellt sind durch ein Verfahren nach einem der Ansprüche 1 bis 10. Ferner ist Teil der Erfindung eine elektrische Maschine, die ein Blechpaket nach Anspruch 12 umfasst, wobei die elektrische Maschine bevorzugt ein Elektromotor ist.

Weitere Ausgestaltungsformen der Erfindung und weitere Merkmale werden anhand der folgenden Spezialbeschreibung mittels der Figuren beschrieben. Dabei handelt es sich um rein exemplarische, schematisch dargestellte Ausgestaltungsformen, die keine Einschränkungen des Schutzbereiches darstellen.

Dabei zeigen:
- Figur 1: eine Explosionsdarstellung einer üblichen elektrischen Maschine mit einem Roto und Blechpaket,
- Figur 2: ein herkömmliches Blechpaket aus mehreren Magnetblechen mit einer Mehrzahl von Wickelzähnen,
- Figur 3: ein Blechpaket mit Magnetblechen in einer alternativen Ausgestaltungsform,
- Figur 4: eine Draufsicht auf ein Magnetblech,
- Figur 5: eine schematische Darstellung des Herstellungsprozesses eines Magnetbleches,
- Figur 6: eine Darstellung der Magnetisierung bei der Anwendung verschiedener Texturen,
- Figur 7: eine schematische Darstellung einer Mikrostruktur einer Textur mit Richtungszeiger für verschiedene magnetische Domänen.

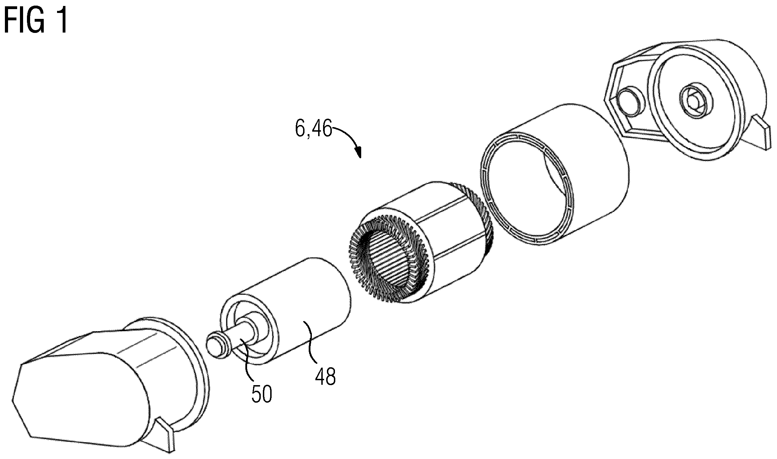

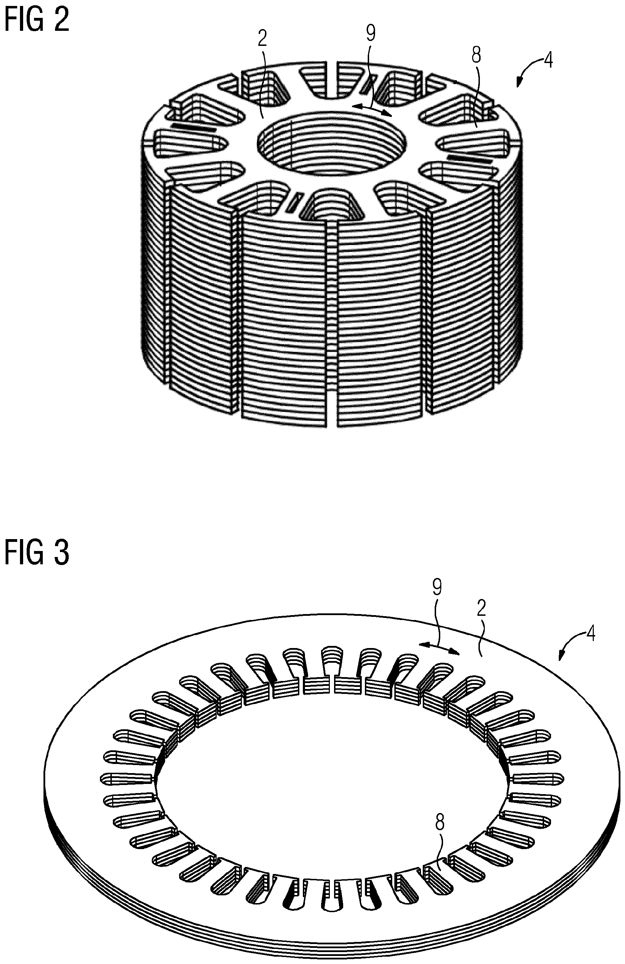

In Figur 1 ist eine Übersichtsdarstellung einer typischen elektrischen Maschine 6 in Form eines Elektromotors 46 als Explosionsdarstellung gezeigt. Die Darstellung dient dazu, die im Folgenden beschriebenen Bauteile örtlich besser einzuordnen. Hierbei weist die elektrische Maschine 6 einen Rotor 48 auf, der auf einer Welle 50 montiert ist. In Figur 2 ist ein Blechpaket 4 dargestellt, das aus einer Vielzahl gestapelter Magnetbleche 2 zusammengesetzt ist. Dieses Blechpaket 4 ist Bestandteil des Rotors 48 gemäß Figur 1. Die einzelnen Magnetbleche 2 des Blechpakets 4 weisen dabei Wickelzähne 8 auf, um die elektrischen Leitungen, die hier nicht dargestellt sind, gewickelt werden. Die Wickelzähne 8 im Blechpaket 4 dienen somit als Joch für einen Elektromagneten.

Eine andere Ausgestaltungform eines Blechpaketes 4 ist in Figur 3 dargestellt, hier sind lediglich vier Magnetbleche 2 übereinandergestapelt, üblicherweise sind dies jedoch deutlich mehr Magnetbleche 2, wie dies in Figur 2 dargestellt ist. Auch die Magnetbleche 2 gemäß Figur 3 weisen Wickelzähne 8 auf, wobei das Magnetblech 2 auch einen umlaufenden Ring 9 aufweist, in den die Wickelzähne 8 übergehen. Der umlaufende Ring 9 in Figur 3 ist im äußeren Bereich des Magnetblechs 2 angeordnet, in dem Magnetblech 2 gemäß Figur 2 ist der umlaufende Ring 9 im Inneren des Magnetbleches 2 angeordnet.

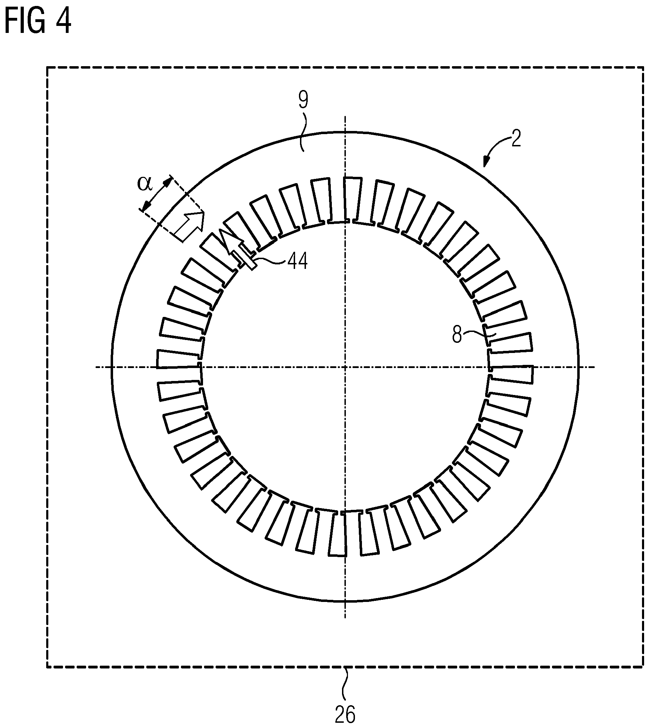

In Figur 4 ist eine Draufsicht auf ein Magnetblech 2 gegeben, das in etwa dem aus Figur 3 entspricht. Hierbei ist eine radiale Erstreckung 44 dargestellt, die einem Radius um den Mittelpunkt des rotationssymmetrischen Magnetblechs 2 entspricht. Entlang einer Radiuslinie sind auch die Wickelzähne 8 angeordnet. Ferner ist in Figur 4 gestrichelt die Blechebene dargestellt, die in dieser Darstellung mit der Bildebene zusammenfällt. Ein zweiter Pfeil im umlaufenden Ring 9 des Magnetblechs 2 ist mit α bezeichnet, auf diesen Winkel wird im Weiteren noch eingegangen werden.

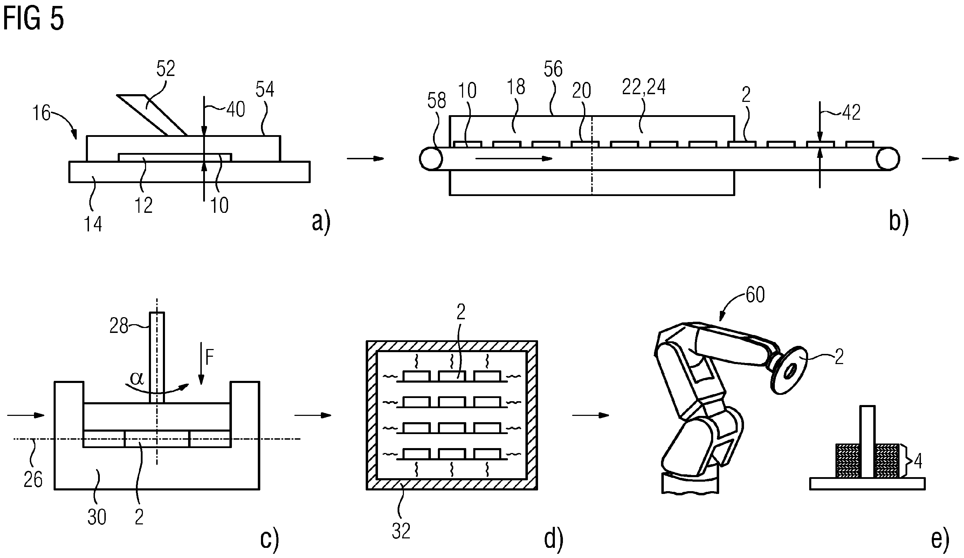

In Figur 5 ist schematisch die Herstellung eines Magnetbleches 2 und im Weiteren eines Blechpaketes 4, wie sie bezüglich der Figuren 1 bis 4 beschrieben sind, veranschaulicht. Die Beschreibung beginnt links oben bei der ersten Teilfigur a, bei der ein Schablonendruckverfahren 16 veranschaulicht ist. Hierbei wird über eine Schablone 54, die in der Regel als Siebschablone dargestellt ist, mittels eines Rakels 52 eine Druckpaste 12 auf ein Substrat 14 aufgedruckt. Hierdurch entsteht ein Grünkörper 10. Der Grünkörper 10 weist üblicherweise eine Dicke 40 auf, die in diesem Zustand bei ca. 250 bis 300 µm liegt. Der Grünkörper 10 weist dabei die Bestandteile der Druckpaste 12 auf. Dabei handelt es sich um Lösungsmittel, polymere Bindemittel und Eisenpulver. Die Eisenpulver haben dabei eine möglichst hohen Eisenanteil, der über 95 Gew. % liegen sollte. Insbesondere liegt der Eisenanteil der Eisenpartikel in der Druckpaste bei über 99 Gew. %, weshalb man hierbei bereits von Reineisen sprechen kann.

Der Grünkörper 10 ist an sich, insbesondere wenn er von Lösungsmitteln getrocknet wurde, soweit mechanisch selbsttragend stabil, dass er, wie in Figur 5 dargestellt, einem Wärmebehandlungsprozess unterzogen werden kann. Dabei wird er vom Substrat 14 gelöst oder wenn das Substrat ein flexibles Substrat 14 ist, direkt auf dem Substrat der Wärmebehandlung, dem ersten Wärmebehandlungsschritt 18 zugeführt. Bei dem ersten Wärmebehandlungsschritt 18 handelt es sich um einen Entbinderungsprozess, bei dem der Grünkörper 10 gegebenenfalls getrocknet, also von Lösungsmitteln befreit wird um im Weiteren so weit aufgeheizt wird, dass auch eine thermische Zersetzung der organischen Bindemittel erfolgt.

In Figur 5 b ist dieser Vorgang schematisch als kontinuierlicher Prozess in einem Tunnelofen 56 dargestellt. Grundsätzlich ist es auch möglich, die einzelnen Vorgänge in Chargier-öfen in einzelnen Chargen durchzuführen. Um eine möglichst hohe Effektivität bei der Produktion zu erzielen, ist jedoch die Anwendung eines Tunnelofens, wie er hier dargestellt ist, zweckmäßig. Während der ersten thermischen Behandlung 18, also dem Entbinderungsvorgang werden beispielweise Temperaturen von ca. 250°C bevorzugt unter Inertgas angelegt. Der zweite Teil des Durchlaufofens 56 wird durch die zweite thermische Behandlung 22 geprägt, die in Form eines Sinterprozesses 24 durchgeführt wird. Hierbei wird die Temperatur gegenüber der ersten thermischen Behandlung deutlich erhöht, sie liegt zum Sintern von Eisenpartikel bei ca. 1000°C bis 1350°C.

Bezüglich der Diktion ist anzumerken, dass der Grünkörper 10 beim Eintreten in den Ofen 56 bzw. bei der ersten thermischen Behandlung eben noch als Grünkörper 10 bezeichnet wird, nach der ersten thermischen Behandlung wird dieser als Vorkörper bezeichnet, der dem Sinterprozess 24 zugeführt wird und nach Verlassen des Durchlaufofens bzw. nach dem Sinterprozess im Allgemeinen wird der Vorkörper 20 als Magnetblech 2 bezeichnet. Das Magnetblech 2 weist eine Dicke 42 auf, die zwischen 150 µm und 250 µm liegt.

Im Weiteren erfolgt gemäß Figur 5 c ein uniaxiales Pressen des Magnetblechs 2 senkrecht zur Blechebene 26. Auf die Wirkung dieses uniaxialen Pressvorgangs in der Uniaxialpresse 30 mittels des Pressstempels 28 wird noch eingegangen werden. Es ist dabei angemerkt, dass der Pressstempel 28 mit einer Kraft F auf das Magnetblech 2 gepresst wird, die mindestens 5 MPa betragen sollte und in der Regel nicht mehr als 50 MPa zu betragen braucht. Ein mehrfaches uniaxiales Pressen z. B. bis zu fünffacher Wiederholung des Pressvorgangs kann dabei zweckmäßig sein und um die gewünschte Texturierung besonders gut auszubilden. Auch eine Temperierung des Magnetblechs 2 beim uniaxialen Pressen ist dabei zweckmäßig. Dies kann beispielsweise in Form von Heißpressen beispielsweise bei einer Temperatur zwischen 100°C und 300°C erfolgen.

Gegebenenfalls kann der Stempel noch um einen Winkel α, der kleiner 5° ist und beispielsweise bei 1 ° liegt, gedreht werden, um neben den uniaxialen Kräften F noch Scherkräfte in das Magnetblech 2 einzubringen. Es hat sich herausgestellt, dass die beschriebenen Krafteinwirkung vergleichbare Wirkung auf die Kristallstruktur des Magnetblechs haben, wie ein Walzvorgang, was aufgrund des eher statischen Charakters der Krafteinwirkung nicht zu erwarten war. Insbesondere vorteilhaft hierbei ist, dass durch das uniaxiale Pressen auch weniger Scherkräfte das Magnetblech 2 belasten, als dies beim Walzen der Fall ist.

In einem weiteren fakultativen Schritt wird ein Rekristallisationsglühen gemäß Figur 5 d in einer dritten thermischen Behandlung 32 durchgeführt. Diese dritte thermische Behandlung 32 ist hier schematisch in Form eines Chargierofens dargestellt, genauso gut kann dies auch in einem Durchlaufofen 56, wie in Figur 5 b, erfolgen. Für das Rekristallisationsglühen 32 kann üblicherweise eine Temperatur von 600°C bis 800°C, beispielsweise 620°C oder 720°C für mindestens 8 Minuten bis etwa 30 Minuten konstant angelegt werden. Diese Temperaturbehandlung in diesem Bereich führt zu einer weiteren verstärkten Ausbildung einer anisotropen Textur in bestimmten Materialbereichen des Magnetblechs 2. Die Temperatur ist dabei eine Einflussgröße auf die Größe der Kristallkörner, die sich in der Textur 34 ausbilden. Je höher die Rekristallisationstemperatur ist, umso größer werden auch die hierbei ausgebildeten Körner. Vorteilhaft ist die Ausbildung größerer Körner (80-150µm) im Blechinneren und kleinerer Körner (50-100 µm) an den Oberflächen (zur Unterdrückung der anomalen Wirbelstromverluste).

Die so wärmebehandelten Magnetbleche 2 werden nun zu einem Blechpaket 4 gestapelt, wobei beispielsweise ein Roboterarm 60 zur Automatisierung des Prozesses herangezogen wird. Das Blechpaket 4 kann dabei insofern verklebt sein, dass die einzelnen Magnetblech 2 mit insbesondere organischen Beschichtungen versehen werden und gegebenenfalls in ein Bad mit organischen Bindemitteln getaucht werden. Auf dieses Verfahren wird hier nicht weiter eingegangen.

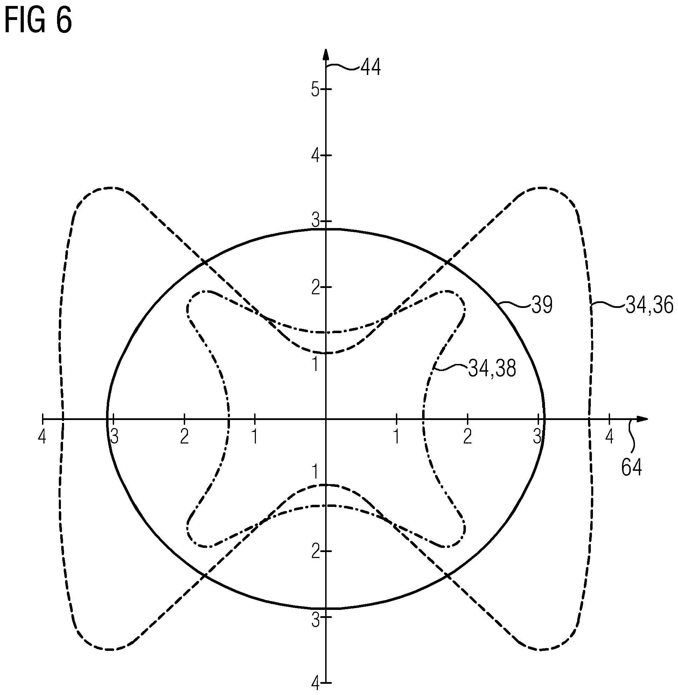

Wie bereits erwähnt, wird mittels des uniaxialen Pressens eine anisotrope Textur 34, insbesondere in den Wickelzähnen 8 in radialer Erstreckung 44 erzeugt. Diese Textur 34 wird auch durch das Rekristallisationsglühen, also der dritten thermischen Behandlung 32, verstärkt. In Figur 6 ist hierbei anhand der Erstreckung entlang der Wickelzähne 8, also zum einen in radialer Erstreckung 44 und quer dazu, also auch in Umfangrichtung 64 die Verluste P_{1,5} bei 50 Hz in der Blechebene 26 aufgetragen. Die erste Textur 34 ist hierbei eine uniaxiale Goss-Textur 36, kommt eine zweite Texturrichtung in 90° hinzu, spricht man von einer sogenannten Würfeltextur 38. Der Kreis 39 in Figur 6 stellt eine rein isotrope Textur 39 dar. Man kann dabei erkennen, dass die Verluste in radialer Erstreckung 44 bei einer Goss-Textur 36 und einer Würfeltextur 38 deutlich geringer ausfallen als bei einem isotropen Werkstoff. Daher ist es überaus vorteilhaft, diese Texturen 34, 36, 38 durch die beschriebene uniaxiale Pressung in das Magnetblech 2 einzubringen und diese gegebenenfalls durch die dritte thermische Behandlung 32, also das Rekristallisationsglühen zu verstärken.

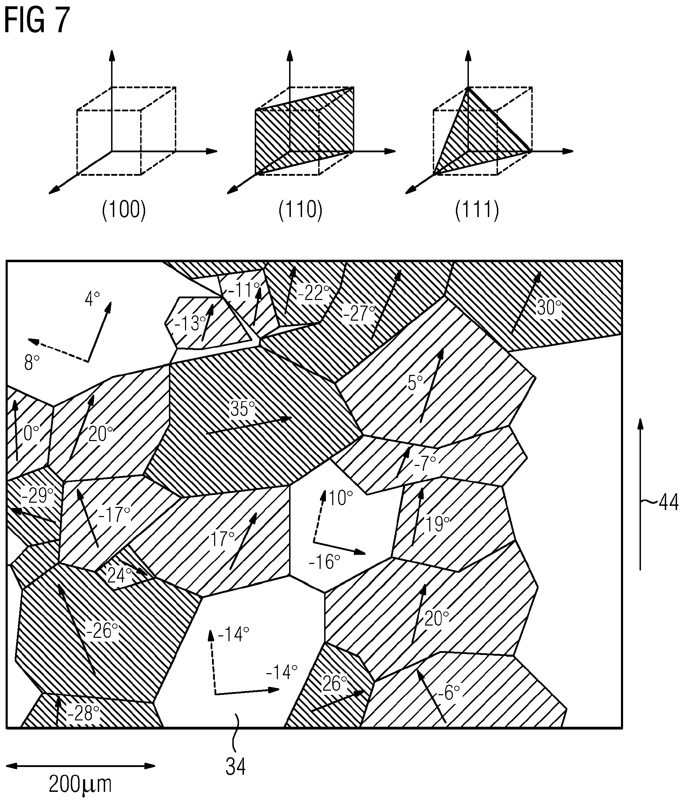

Texturen 34 im Allgemeinen führen naturgemäß nicht zu exakt ausgerichteten magnetischen Domänen, vielmehr handelt es sich dabei um Vorzugsrichtungen, die, wie in Figur 7 dargestellt, zum größten Teil an der radialen Erstreckung 44 ausgerichtet sind. Dabei sollten mindestens 50 % der einzelnen Körner, wie in Figur 7 mit den Pfeilen und den Winkelangaben dargestellt, nicht mehr als 36° von den Vorzugsrichtungen radial und tangential 44 abweichen. Hierbei würde man von einer isotropen Textur sprechen, die, wie gemäß Figur 6 abgebildet, höhere magnetische Verluste bezüglich der Vorzugsrichtungen bewirkt.

### Bezugszeichenliste

- 2: Magnetblech
- 4: Blechpaket
- 6: elektrische Maschine
- 8: Wickelzähne
- 9: umlaufender Ring
- 10: Grünkörper
- 12: Druckpaste
- 14: Substrat
- 16: Schablonendruckverfahren
- 18: erste thermische Behandlung
- 20: Vorkörper
- 22: zweite thermische Behandlung
- 24: Sinterprozess
- 26: Blechebene
- 28: Pressstempel
- 30: Uniaxialpresse
- 32: dritte thermische Behandlung
- 34: Textur
- 36: Goss-Textur
- 38: Würfeltextur
- 39: Isotrope Textur
- 40: Dicke Grünkörper
- 42: Dicke Magnetblech
- α: Winkel
- 44: radiale Erstreckung
- 46: Elektromotor
- 48: Rotor
- 50: Welle
- 52: Rakel
- 54: Schablone
- 56: Durchlaufofen
- 58: Förderband
- 60: Roboterarm
- 64: Umfangrichtung

## Patentansprüche

1. Verfahren zur Herstellung eines rotationssymmetrischen Magnetblechs (2) eines Blechpakets (4) einer elektrischen Maschine (6), das eine Mehrzahl von radial verlaufenden Wickelzähnen (8) aufweist, umfassend folgende Schritte:
- Herstellen eines Grünkörpers (10) durch Aufbringen einer Druckpaste (12) auf ein Substrat (14) mittels eines Schablonendruckverfahrens (16), wobei die Druckpaste (12) Bindemittel und Eisenpartikel umfasst und die Eisenpartikel mehr als 95 Gew. % Eisen umfassen,
- eine erste thermische Behandlung (18), wobei die Bindemittel aus dem Grünkörper (10) entfernt werden und daraus ein Vorkörper (20) entsteht,
- eine zweite thermische Behandlung (22) des Vorkörpers (20) in Form eines Sinterprozesses, zur Herstellung des Magnetblechs (2), wonach
- das Magnetblech (2) in seiner Blechebene (26) uniaxial mittels eines Pressstempels (28) mit einem Druck von mehr als 5 MPa gepresst wird.

2. Verfahren nach Anspruch 1, **dadurch gekennzeichnet, dass** eine dritte thermische Behandlung (32) nach dem uniaxialen Pressen in Form eines Rekristallisationsglühens erfolgt.

3. Verfahren nach Anspruch 2, **dadurch gekennzeichnet, dass** während des Rekristallisationsglühens eine Temperatur zwischen 600 ° C und 800 °C für eine Zeit von wenigstens 8 min. konstant gehalten wird.

4. Verfahren nach einem der Ansprüche 1 bis 3, **dadurch gekennzeichnet, dass** entlang der radialen Erstreckung der Wickelzähne eine anisotrope magnetische Textur (34) erzeugt wird.

5. Verfahren nach Anspruch 4, **dadurch gekennzeichnet, dass** entlang der radialen Erstreckung der Wickelzähne eine Goss-Textur erzeugt wird.

6. Verfahren nach einem der Ansprüche 4 oder 5, **dadurch gekennzeichnet, dass** die Körner der Textur (34) einen mittleren Durchmesser in einer Bildebene von 80 µm bis 400 µm aufweisen.

7. Verfahren nach einem der vorhergehenden Ansprüche, **dadurch gekennzeichnet, dass** mittels des Schablonendruckverfahrens (16) die Dicke des Grünkörpers (10) in einem Bereich von 100 µm bis 400 µm eingestellt wird, woraus eine Dicke des Magnetblechs (2) resultiert, die in einem Bereich von 100 µm bis 300 µm liegt.

8. Verfahren nach Anspruch 7, **dadurch gekennzeichnet, dass** die Dicke (42) des Magnetblechs zwischen 150 µm und 250 µm eingestellt wird.

9. Verfahren nach einem der vorhergehenden Ansprüche, **dadurch gekennzeichnet, dass** die Eisenpartikel einen Eisenanteil von mehr als 97 Gew. %, bevorzugt mehr als 99 Gew. % aufweisen.

10. Verfahren nach einem der vorhergehenden Ansprüche, **dadurch gekennzeichnet, dass** der Pressstempel (28) während des Pressvorgang um einen Winkel α von weniger als 10 ° insbesondere weniger als 3 °, mindestens 0,5 ° gedreht wird.

11. Rotationssymmetrisches Magnetblech für ein Blechpaket (4) einer elektrischen Maschine (6), **dadurch gekennzeichnet, dass** das Magnetblech (2) eine Dicke (42) aufweist, die zwischen 100 µm und 250 µm liegt und eine gesinterte metallische Phase aufweist, die mindestens einen Eisanteil von 95 Gew. % umfasst, wobei eine Mehrzahl von radial verlaufenden Wickelzähnen (8) vorgesehen sind und entlang der radialen Erstreckung (44) der Wickelzähne (8) eine anisotrope magnetische Textur (34) vorliegt.

12. Blechpaket einer elektrischen Maschine mit einer Mehrzahl von gestapelten Magnetblechen (2) hergestellt mittels eines Verfahrens nach einem der Ansprüche 1 bis 10.

13. Elektrische Maschine umfassend ein Blechpaket (4) nach Anspruch 12.

14. Elektrische Maschine nach Anspruch 13, **dadurch gekennzeichnet, dass** die elektrische Maschine (6) ein Elektromotor ist.
